# EUROPÄISCHE PATENTANMELDUNG

(11) **EP 0 896 903 A2**
(43) Veröffentlichungstag der Anmeldung: **17.02.1999**
(21) Anmeldenummer: 98112706.1
(22) Anmeldetag: 09.07.1998
(51) Int. Cl.: B60R 16/02

(54) **Systemarchitektur zur Realisierung von Funktionen in einem Kraftfahrzeug**

(30) Priorität: 13.08.1997 DE 19735018
(71) Anmelder: Volkswagen Aktiengesellschaft, 38436 Wolfsburg (DE)
(72) Erfinder: Bergholz, Ralf, Dr., 38108 Braunschweig (DE)

(57) **Zusammenfassung**

Die Erfindung betrifft eine Systemarchitektur zur Realisierung von Funktionen in einem Kraftfahrzeug, umfassend mindestens zwei x-by-wire-Systeme, deren Steuergeräte (2, 5, 8) direkt oder über eine Busstruktur (10) miteinander verbunden sind.

## Beschreibung

Die Erfindung betrifft eine Systemarchitektur zur Realisierung von Funktionen in einem Kraftfahrzeug.

Aufgrund gestiegener Komfortansprüche und Sicherheitsanforderungen an Kraftfahrzeuge, müssen immer mehr Funktionen dem Kraftfahrzeugführer zur Verfügung gestellt werden. Dies wird einerseits durch Integration neuer Systemkomponenten, wie beispielsweise dem Airbag und andererseits durch Austausch bzw. Ergänzung vorhandener durch leistungsstärkere Komponenten realisiert. Ein Beispiel hierfür sind x-by-wire-Systeme, bei denen ein meist mechanisches Stellsignal in ein elektrisches Stellsignal gewandelt und einem Steuergerät zugeführt wird, das zugeordnete Systemkomponenten rein elektrisch ansteuert.

Aus der DE 195 37 348 ist ein brake-by-wire-System für ein hydraulisches Bremssystem mit einem Aktuator bekannt, der durch ein elektrisches Signal eines pedalbetätigten Wandlers betätigbar ist und der die Zufuhr von Hydraulikfluid zu einer Fahrzeugbremse steuert.

Weiter ist ein drive-by-wire-System bekannt, bei dem die Betätigung eines Fahrpedals mittels eines Potentiometers in ein elektrisches Signal gewandelt und einem Steuergerät zugeführt wird, das dann beispielsweise die Einspritzmenge von Kraftstoff in die Zylinder steuert. Bekannt ist ferner ein steer-by-wire-System, bei dem mittels eines Positionsaufnehmens die Lenkbewegungen des Lenkrades in ein elektrisches Signal zur Auslenkung der Räder umgewandelt wird. Der Vorteil dieser x-by-wire-Systeme ist, daß mittels elektrischer Signale die Systemkomponenten sehr genau ansteuerbar sind. Nachteilig an dem bekannten Systemarchitekturen ist, daß durch zusätzlich gewünschte Funktionen die Anzahl der Systemkomponenten und deren Verdrahtung zunimmt.

Der Erfindung liegt daher das technische Problem zugrunde, eine Systemarchitektur zur Realisierung von Funktionen in einem Kraftfahrzeug zu schaffen, die nur geringen zusätzlichen Hardware-Aufwand erfordert.

Die Lösung des technischen Problems ergibt sich durch die Merkmale des Patentanspruches 1. Dazu umfaßt die Systemarchitektur eine Anzahl von x-by-wire-Systemen, deren Steuergeräte direkt oder über eine Busstruktur miteinander verbunden sind. Damit stehen jedem Steuergerät eines x-by-wire Systems die Stellsignale oder andere Steuergrößen zur Verfügung. Mittels dieser zusätzlichen Signale kann ein jeweiliges Steuergerät bei Bedarf seine zugehörige Systemkomponente modifiziert ansteuern, d.h. eine zusätzliche Funktion realisieren, ohne zusätzliche Hardware-Komponenten zu benötigen. Weitere vorteilhafte Ausgestaltungen der Erfindung ergeben sich aus den Unteransprüchen.

Durch die Zuordnung mindestens eines Interfaces, mittels dessen die einzelnen Verbindungen zwischen dem x-by-wire-Systemen programmierbar veränderbar sind, können fahrzeug- und/oder fahrerindividuell die Funktionen eingestellt werden. Zur vereinfachten Programmierung kann dazu in einer Zentraleinheit eine Funktionsbibliothek abgelegt sein, so daß jeweils nur die gewünschten Funktionen ausgewählt werden müssen. Da der prinzipielle Aufbau der Steuergeräte für die einzelnen x-by-wire-Systeme gleich kann ein Steuergerät auch mehreren x-by-wire-Systemen zugeordnet sein. Die erfordert zwar unter Umständen einen gewissen Mehraufwand für das Steuergerät, spart jedoch separate Steuergeräte und Verdrahtung ein.

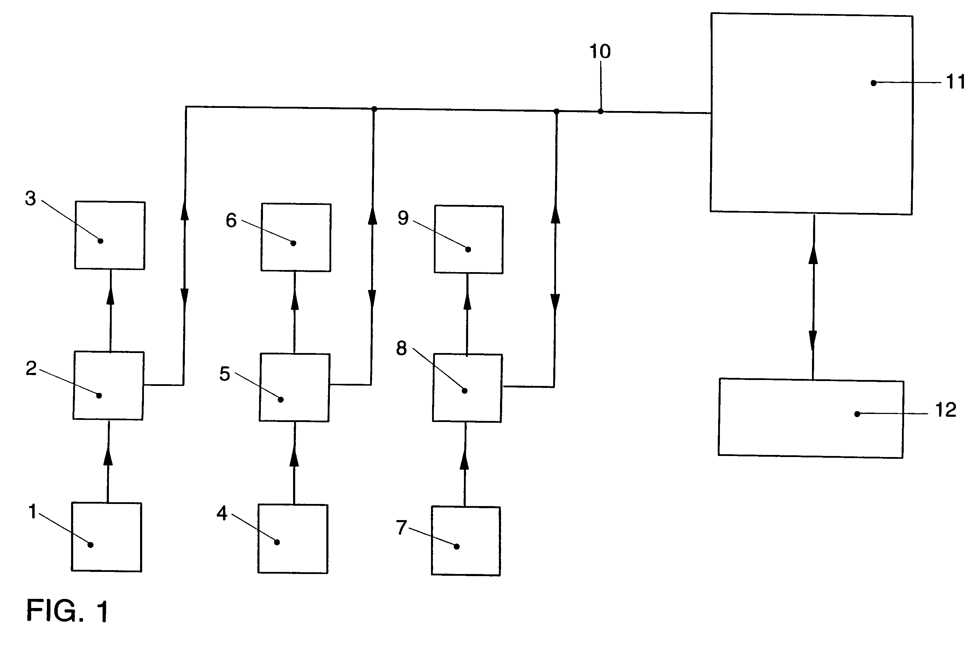

Die Erfindung wird nachfolgend anhand eines bevorzugten Ausführungsbeispieles näher erläutert. Die einzige Figur zeigt ein Blockschaltbild der Systemarchitektur.

Die Systemarchitektur zur Realisierung von Funktionen umfaßt ein clutch-by-wire, ein brake-by-wire und ein drive-by-wire-System. Das clutch-by-wire-System umfaßt ein Kupplungspedal 1, ein Steuergerät 2 und die Kupplung 3. Dabei wird bei Betätigung des Kupplungspedals 1 mittels eines Potentiometers, Drucksensors oder Wegaufnehmers die Betätigung in ein elektrisches Signal umgewandelt und dem Steuergerät 2 zugeführt, das daraus ein elektrisches Stellsignal für die Kupplung 3 erzeugt. Entsprechend umfaßt das brake-by-wire-System ein Bremspedal 4, ein Steuergerät 5 und die Bremsanlage 6, wobei das von Steuergerät 5 erzeugte Stellsignal beispielsweise an den Rädern angeordnete Elektromotoren oder eine Hydraulikpumpe ansteuert. Das drive-by-wire-System umfaßt ein Gaspedal 7, ein Steuergerät 8 und einen Motor 9, wobei das Stellsignal das Steuergerät 8 bei einem Einspritzmotor beispielsweise über die Einspritzpumpe die Einspritzmenge steuert. Alle Steuergeräte 2, 5, 8 der x-by-wire-Systeme sind über einen bidirektionalen Bus 10 mit einer Zentraleinheit 11 verbunden. Die Zentraleinheit 11 wiederum ist bidirektional mit einem Interface 12 verbunden. Das Interface 12 ist beispielsweise als Eingabeeinheit mit Bildschirm ausgebildet. Die Zentraleinheit 11 steuert einerseits den Datenverkehr auf dem bidirektionalen Bus 10 und dient andererseits als Programmspeicher, in dem verschiedene Funktionsmodule abgelegt sind, die über das Interface 12 aktivierbar oder deaktivierbar sind.

Eine mögliche zu realisierende Funktion ist ein hill-holder. Bei Bergfahrten tritt gewöhnlich das Problem auf, daß sich die Motordrehzahl stark erhöht, so daß es zu unerwünschten Temperaturerhöhungen im Motorbereich kommt. Zur Vermeidung dieses Problems kann bei Überschreitung einer Grenzdrehzahl die Kupplung betätigt werden. Wird diese Funktion vom Fahrer gewünscht, so wird das entsprechende Funktionsmodul in der Zentraleinheit 11 angesprochen und das Steuergerät 2 der Kupplung 3 umprogrammiert. Dies hat zur Folge, daß das Steuergerät 2 nicht nur Betätigungen des Kupplungspedals 1 auswertet, sondern auch die vom Steuergerät 8 abgegebenen Daten auswertet. Registriert das Steuergerät 8 eine Bergabfahrt, da sich z.B. die Motordrehzahl ohne Betätigung des Gaspedals 7 erhöht, und Überschreitung einer Grenzdrehzahl für den Motor 9, so wird ein entsprechendes Signal auf den bidirektionalen Bus 10 geschaltet und vom Steuergerät 2 empfangen. Das Steuergerät 2 erzeugt ein Stellsignal und betätigt die Kupplung 3, ohne daß das Kupplungspedal 1 betätigt wurde. Sinkt die Motordrehzahl, wird durch das Steuergerät 2 wieder entkuppelt. Dies Beispiel macht deutlich, daß durch die neue Systemarchitektur Funktionen realisierbar sind, die ein einzelnes x-by-wire-System nicht erfüllen könnte.

## Patentansprüche

1. Systemarchitektur zur Realisierung von Funktionen in einem Kraftfahrzeug, umfassend mindestens zwei x-by-wire-Systeme, deren Steuergeräte (2, 5, 8) direkt oder über eine Busstruktur (10) miteinander verbunden sind.

2. Systemarchitektur nach Anspruch 1, dadurch gekennzeichnet, daß den x-by-wire-Systemen mindestens ein Interface (12) zugeordnet ist, über das die Steuergeräte (2, 5, 8) der x-by-wire-Systeme programmierbar sind.

3. Systemarchitektur nach Anspruch 2, dadurch gekennzeichnet, daß die x-by-wire-Systeme mit einer Zentraleinheit (11) mit Interface (12) verbunden sind, wobei in der Zentraleinheit (11) Programmroutinen abgelegt sind, die über das Interface (12) aktivierbar oder deaktivierbar sind.

4. Systemarchitektur nach einem der vorrangegangenen Ansprüche, dadurch gekennzeichnet, daß einzelnen oder allen x-by-wire-Systemen ein einziges Steuergerät (2, 5, 8) zugeordnet ist.
